# EUROPÄISCHE PATENTSCHRIFT

(11) **EP 0 637 365 B1**
(45) Veröffentlichungstag und Bekanntmachung des Hinweises auf die Patenterteilung: **25.10.1995**
(21) Anmeldenummer: 93909374.6
(22) Anmeldetag: 20.04.1993
(51) Int. Cl.: F16K 1/226

(54) **ABSPERRKLAPPE MIT EINER VERANKERTEN ABDICHTUNGSMANSCHETTE**
VALVE PROVIDED WITH AN ANCHORED A SEALING CUP
CLAPET COMPRENANT UNE COUPELLE D'ETANCHEITE FIXEE PAR ANCRAGE

(30) Priorität: 24.04.1992 DE 4213521
(43) Veröffentlichungstag der Anmeldung: 08.02.1995
(73) Patentinhaber: KSB Aktiengesellschaft, 67227 Frankenthal (DE)
(72) Erfinder: WATTIGNIER, Claude, F-33400 Talence (FR); DUBOIS, Jean-Paul, F-33230 Contras (FR)
(86) Internationale Anmeldenummer: EP9300945
(87) Internationale Veröffentlichungsnummer: WO9322588

(56) Entgegenhaltungen:
- FR-A- 2 069 639
- GB-A- 1 253 430

## Beschreibung

Eine Absperrklappe mit elastischer Manschette zum Absperren des Durchflusses in einem Leitungssystem ist ein in der Technik gut bekanntes Produkt. Oft wird ein Modell in einer Vielzahl von Nennweiten und in großer Stückzahl produziert.

Der Benutzer erwartet von einer solchen Absperrklappe ein sicheres Absperren des Durchflusses eines Fördermediums durch hohe Dichtheit und geringe Leckrate an der Klappenscheibe sowie eine absolute Dichtheit des Innenraumes gegen die Umwelt, sowohl an den Anschlußflanschen als auch am Durchgang der Klappenachse zur Betätigung der Absperrklappe.

Die in großer Stückzahl verwendeten Absperrklappen sind in der Regel robust, einfach herzustellen und wirtschaftlich kostengünstig und zeichnen sich durch eine sehr einfache Gestaltung der Manschette aus, welche eben und achsensymmetrisch ist und lediglich zwei zylindrische Öffnungen zum Durchlaß der Klappenachse aufweist.

Zum ersten hat diese Bauform den Nachteil, daß sich die Manschette beim Eintauchen der Klappenscheibe axial verschiebt und keine vorhersehbare Geometrie an der Dichtstelle mehr vorliegt. Die einfache Bauform hat zum zweiten den Nachteil, daß mit der Zeit das elastische Material der Manschette in abgesperrter Stellung der Armatur von der hochdruckbeaufschlagten Seite auf die niederdruckbeaufschlagte Seite der Klappenscheibe ausweicht. Durch dieses axiale Ausweichen wird der Anpreßdruck der Klappenscheibe in die Manschette teilweise abgebaut und die Dichtwirkung verringert.

Zur Verhinderung des axialen Ausweichens der Manschette sind verschiedene Lösungswege eingeschlagen worden. So ist es allgemein bekannt und in einer Vielzahl von Industriekatalogen dargestellt, die Manschette mit einem umlaufenden Bund zu versehen, welcher von einer Nut im Gehäuse aufgenommen wird. Dieser Bund befindet sich am äußeren Umfang der Manschette und erstreckt sich in axialer Richtung sowohl in die hochdruckseitige als auch in die niederdruckseitige Richtung. Bund und Nut stellen durch ihre geometrischen Abmessungen eine formschlüssige Verbindung der Manschette mit dem Gehäuse dar und verhindern somit beim Eintauchen der Klappenscheibe in die Manschette eine axiale Verschiebung der Manschette. Eine bekannte, in der EP-PS 0 182 676 offenbarte Ausführung zeigt des weiteren eine Manschette mit zwei schmalen, umlaufenden Bunden, welche in Nuten des Gehäuses eingreifen und eine formschlüssige Verankerung bilden.

Eine den Merkmalen des Oberbegriffes des Anspruchs 1 entsprechende Absperrklappe mit einer Dichtmanschette und einem Bund, der in einer Nut des Gehäuses aufgenommen wird, ist aus der FR-A- 2 069 639 bekannt. Damit das elastische Material der Manschette bei Kontakt mit der Ventilklappe ausweichen kann, ist das Volumen der Nut größer als das des Bundes. Die Nut ist dabei so bemessen, daß ein Ausweichraum zwischen dem Bund und dem Nutgrund vorgesehen ist. Das elastische Material kann somit in radialer Richtung ausweichen, während der Bund in der Nut seitlich ohne Spiel geführt ist.

Das Problem besteht darin, daß zwar mit den oben genannten Gestaltungsmöglichkeiten ein axiales Verschieben beim Eintauchen der Klappenscheibe verhindert, dem Ausweichen des elastischen Materials der Manschette bei einseitiger Druckbeaufschlagung im Laufe der Zeit aber nicht zufriedenstellend entgegengewirkt wird.

Der Erfindung liegt die Aufgabe zugrunde, eine Absperrklappe mit elastischer Manschette zu schaffen, bei welcher das axiale Ausweichen der Manschette um die Klappenscheibe verringert ist und die Manschette im Gehäuse verankert ist.

Das Problem wird durch die im Anspruch 1 angegebene Lehre gelöst. Die mit der Erfindung erzielbaren Vorteile liegen insbesondere darin, daß die Verbesserung der Dichtheit durch einfach einsetzbare konstruktive Abänderungen des Grundtyps erreicht wird. Die verringerte Breite des Bundes der Manschette gegenüber der Breite der im Gehäuse vorhandenen Nut ermöglicht dem elastischen, inkompressiblen Material der Manschette ein zumindest teilweises Ausweichen beim Eintauchen der Klappenscheibe in die Manschette beim Schließen der Klappe. Das Walken der Manschette wird verringert, da für das vom eintauchenden Klappenkörper verdrängte Volumen ein Ausgleichsraum zur Verfügung steht. Die Verformung der Manschette auf der Niederdruckseite ist durch diesen Volumenausgleich überraschenderweise geringer und damit die Dichtwirkung über längere Zeit hinweg gesichert.

Vorteilhafte Ausgestaltungen der Erfindung sind in den Ansprüchen 2 bis 5 angegeben. Die Weiterbildung nach Anspruch 2 erzeugt eine Vorspannung in der in das Gehäuse eingebrachten Manschette, welche diese in ihren Sitz drückt und eine sich gegen eine axiale Verschiebung widersetzende Reibungskraft erzeugt. Damit wird die elastische Manschette wirksamer als bei dem Grundtyp durch Kraftschluß im Gehäuse festgehalten. Die eingebrachte Vorspannung erschwert außerdem das Ausweichen der Manschette in den Niederdruckbereich bei Beaufschlagung mit dem Fördermedium, da sie der Verformung einen höheren Widerstand entgegensetzt als eine nicht vorgespannte Manschette. Zusätzlich wird die Verankerung der Manschette auch bei geöffneter, nicht eingetauchter Klappenscheibe gewährleistet.

Die Weiterbildung nach Anspruch 3 offenbart einen günstigen Bereich der Längenverhältnisse, in welchem sich für die Montage, den Betrieb, den Abrieb und die Betätigungskräfte, die Dichtheit und die Verankerung der Manschette besonders gute Ergebnisse erzielen lassen.

Die Weiterbildung nach Anspruch 4 erschwert zusätzlich das axiale Ausweichen der Manschette bei der einseitigen Beaufschlagung mit dem Druck des Fördermediums, wie es in geschlossener Stellung vorkommt. Mit dem Eintauchen der Klappenscheibe wird der zur Verfügung stehende Raum vollständig ausgefüllt. Das verdrängte Material stützt sich an den Seitenwänden der Nut ab und stellt sich einer weiteren Verformung entgegen.

Die Weiterbildung nach Anspruch 5 erhöht die Dichtwirkung im Bereich der Klappenachse. Da an dieser besonders kritischen Stelle zwei Dichtfunktionen vorliegen, nämlich das Absperren des Fördermediums vor und hinter der Klappenscheibe und das Abdichten der Armatur gegen die Umwelt, ermöglicht die Verbreiterung des Bundes in diesem Bereich bis zur spielfreien Anlage an die Seitenwände der Nut eine Abstützung der Manschette und wirkt dem Ausweichen der Manschette an der Klappenachse unter Druckbeaufschlagung entgegen. Der Eintauchvorgang im Bereich der Klappenachse ist durch den ständigen Kontakt der Klappenscheibe mit der Manschette verringert und der Volumenausgleich weniger entscheidend.

Ausführungsbeispiele der Erfindung sind in den Zeichnungen dargestellt und werden im folgenden näher beschrieben. Es zeigen
- Fig. 1: die Manschette vor dem Eintauchen der Klappenscheibe als Ausschnitt im Längsschnitt, die
- Fig. 2: die verformte Manschette nach dem Eintauchen der Klappenscheibe als Ausschnitt im Längsschnitt.

Das Gehäuse (1) der Absperrarmatur ist im Bereich des durchströmten Teils mit einer Manschette (2) aus elastischem, inkompressiblem Material ausgekleidet. Die Manschette (2) weist einen umlaufenden Bund (3) auf, welcher in einer umlaufenden Nut (4) frei axial verschiebbar zu liegen kommt. Bewirkt wird dies dadurch, daß die Breite des Bundes (3) geringer als die Breite der Nut (4) ist und ein Zwischenraum (5, 5') entsteht, welcher im Idealfall gleichmäßig auf die beiden Seiten verteilt ist. Die Klappenscheibe (6) ist in leicht geöffneter Stellung von der Manschette (2) abgehoben dargestellt.

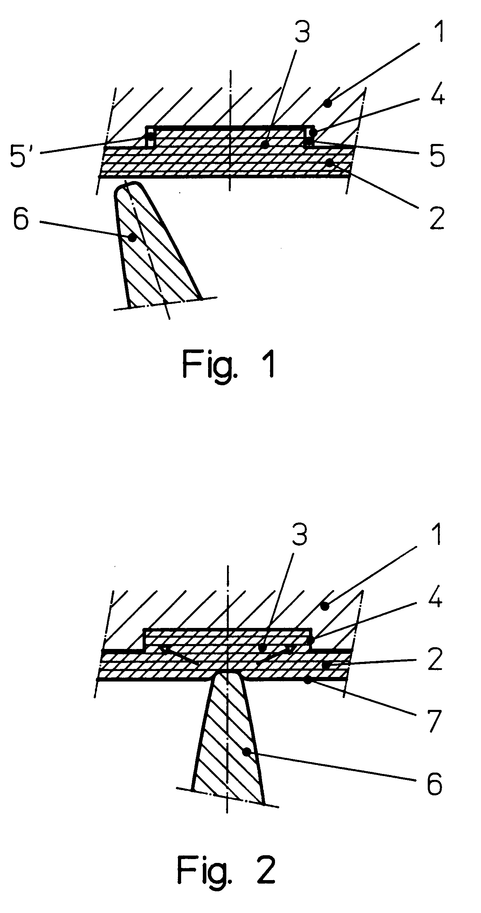

In Fig. 2 wird die geschlossene Absperrarmatur gezeigt. Die Klappenscheibe (6) taucht in die Manschette (2) ein und verdrängt ein Teil des elastischen Materials der Manschette (2). Wich das verdrängte Material bislang an der Oberfläche (7) der Manschette in Form von Verwerfungen aus, so kann nun das Material in die Zwischenräume (5, 5') ausweichen. Dies wird durch die Pfeile angedeutet, welche auch zusätzlich darauf hinweisen, daß die Ausweichbewegung der Manschette unter einseitiger Druckbeaufschlagung blockiert wird, da die Manschette in der Nut abgestützt wird und somit die Bewegungsfreiheit beschränkt.

## Patentansprüche

1. Absperrklappe, bestehend aus einem Gehäuse (1), einer drehbaren Klappenscheibe (6) und einer elastischen Manschette (2) zur Abdichtung der Klappenscheibe (6) gegen das Gehäuse (1) zwecks Absperren des Durchflusses sowie zur Abdichtung einer von der Klappenscheibe (6) durch eine Durchgangsöffnung in der Manschette (2) in einen Schaft des Gehäuses (1) ragenden Klappenachse gegen das Gehäuse (1), wobei die Manschette (2) mit einem radial außenliegenden, sich über einen Teilbereich der Manschette (2) in axialer Richtung erstreckenden und der in die Manschette (2) eingetauchten Klappenscheibe (6) gegenüberliegenden Bund (3) versehen ist und das Gehäuse (1) eine umlaufende Nut (4) zur Aufnahme des Bundes (3) der Manschette (2) aufweist, **dadurch gekennzeichnet**, daß der Bund (3) in geöffneter Stellung der Klappenscheibe (6) eine derart verringerte axiale Breite gegenüber der Nut (4) besitzt, daß mindestens ein seitlicher Zwischenraum (5, 5') gebildet wird, in welchen das Material der Manschette (2) beim Eintauchen der Klappenscheibe (6) in die Manschette (2) während des Schließvorganges zumindest teilweise ausweicht.

2. Absperrklappe nach Anspruch 1, dadurch gekennzeichnet, daß die elastische Manschette an einem Sitz des Gehäuses (1) anliegt und daß die abgewickelte Länge der elastischen Manschette (2) größer als die abgewickelte Länge ihres Sitzes im Gehäuse (1) ist.

3. Absperrklappe nach Anspruch 2, dadurch gekennzeichnet, daß die abgewickelte Länge der elastischen Manschette (2) um 0,5 - 1,5 % größer als die abgewickelte Länge ihres Sitzes im Gehäuse (1) ist.

4. Absperrklappe nach einem der Ansprüche 1 bis 3, dadurch gekennzeichnet, daß das von der eingetauchten Klappenscheibe verdrängte Volumen des Materials der Manschette (2) gleich dem in Offenstellung der Klappenscheibe (6) vorhandenen Volumen des Zwischenraums (5,5') ist.

5. Absperrklappe nach einem der Ansprüche 1 bis 4, dadurch gekennzeichnet, daß der Bund (3) im Bereich der Durchgangsöffnung der Klappenachse spielfrei an Seitenwänden der Nut (4) des Gehäuses (1) anliegt und nur im übrigen Bereich eine geringere Breite als die Nut (4) besitzt.

## Claims

1. A shut-off valve comprising a housing (1), a rotatable shut-off disk (6) and an elastic cuff (2) to provide a seal between the shut-off disk (6) and the housing (1) for the purpose of shutting off flow and for providing a seal between a disk shaft, which extends from the shut-off disk (6) through a passage opening in the cuff (2) into a shank of the housing (1), and the housing (1), the cuff (2) being provided with a radially external collar (3) which extends over part of the cuff (2) in the axial direction and is opposite to the shut-off disk (6) placed in the cuff (2) and the housing (1) possesses an encircling groove (4) for receiving the collar (3) of the cuff (2), characterized in that the collar (3) possesses, in the open state of the shut-off disk (6), such a reduced axial width in relation to the groove (4) that at least one lateral intermediate space (5 and 5') is formed, into which the material of the cuff (2) is thrust at least partially out of position when the shut-off disk (6) penetrates the cuff (2) during closing.

2. The shut-off valve as claimed in claim 1, characterized in that the elastic cuff engages a seat on the housing (1) and in that the developed length of the elastic cuff (2) is larger than the developed length of its seat in the housing (1).

3. The shut-off valve as claimed in claim 2, characterized in that the developed length of the elastic cuff (2) is 0.5 to 1.5 % larger than the developed length of its seat in the housing (1).

4. The shut-off valve as claimed in any one of the claims 1 through 3, characterized in that the volume of the material, displaced by the penetrating shut-off disk is equal to the volume, present in the open setting of the shut-off disk (6), of the intermediate space (5 and 5').

5. The shut-off valve as claimed in any one of the claims 1 through 4, characterized in that adjacent to the passage opening for the shut-off disk shaft the collar (3) engages the side wall surfaces of the groove (4) of the housing (1) free of play and it is merely in the remaining part that it has a smaller width than the groove (4).

## Revendications

1. Dispositif de robinetterie, comportant un corps (1), une disque obturatrice tournante et une garniture d'étanchéité élastique (2) pour étanchéifier la disque obturatrice (6) contre le corps (1) aux fins d'arrêter la circulation et pour étanchéifier un arbre du dispositif dressé à travers une ouverture de passage dans la garniture d'étanchéité (2) dans un col du corps (1), la garniture (2) étant munie d'un tenon (3) s'étendant dans le sense axial sur une partie de la garniture (2) et orienté côté opposé de la disque obturatrice (6) pénétrée dans la manchette (2), le corps (1) étant munie d'une gorge circonferentielle (4) pour recevoir le tenon (3) de la garniture (2), caractérisé en ce qu' en position ouverte de la disque obturatrice (6) la largeur du tenon (3) est inférieure à celle de la gorge (4), de telle sorte qu' au moins un espace latéral (5, 5') se constitue, dans lequel le matériau de la garniture (2) s'échappe au moins partiellement lors de la pénétration de la disque oburatrice (6) dans la garniture (2) pendant la fermeture.

2. Dispositif selon la revendication 2, caractèrisé en ce que la garniture élastique (2) s'appuie contre un siège du corps (1) et en ce que la longueur développée de la garniture est supérieure à la longueur développée de son siège dans le corps (1).

3. Dispositif selon la revendication 2, caractérisé en ce que la longueur développée de la garniture (2) est supérieure de 0,5 à 1,5 % à la longueur développée de son siège dans le corps (1).

4. Dispositif selon l'une quelconque des revendications 1 à 3, caractérisé en ce que le volume déplacé du matériau de la garniture (2) par la disque obturatrice (6) pénétrée est égal au volume de l'espace (5, 5') existant quand la disque obturatrice (6) est en position ouverte.

5. Dispositif selon l'une quelconque des revendication 1 à 4, caractérisé en ce que le tenon (3) s'appuie sans jeu aux faces latérales de la gorge (4) du corps (1) et dispose uniquement sur le reste d'une largeur reduite comparée à celle de la gorge (4).
